# FASCICULE DE BREVET EUROPEEN

(11) **EP 2 389 544 B1**
(45) Date de publication et mention de la délivrance du brevet: **19.12.2012**
(21) Numéro de dépôt: 10704389.5
(22) Date de dépôt: 20.01.2010
(51) Int. Cl.: F24F 5/00

(54) **DISPOSITIF DE CHAUFFAGE-RAFRAICHISSEMENT PAR RAYONNEMENT DES PAROIS, DU PLAFOND ET DES VITRAGES**
VORRICHTUNG ZUR STRAHLUNGSERWÄRMUNG-KÜHLUNG VON WÄNDEN, EINER DECKE UND VERGLASUNG
DEVICE FOR RADIATION HEATING-COOLING OF WALLS, CEILING AND GLAZING

(30) Priorité: 26.01.2009 FR 0900315
(43) Date de publication de la demande: 30.11.2011
(73) Titulaire: Robert-Rompillon, Jean-paul, 67400 Illkirch (FR)
(72) Inventeur: Robert-Rompillon, Jean-paul, 67400 Illkirch (FR)
(74) Mandataire: Burkard, Thierry
(86) Numéro de dépôt international: PCT/FR2010/000050
(87) Numéro de publication internationale: WO 2010/084269

(56) Documents cités:
- EP-A- 1 205 715
- DE-A1- 19 845 557
- US-A- 3 343 474
- US-A- 4 523 519

## Description

L'invention concerne un dispositif de chauffage-rafraîchissement des personnes dans les habitacles de tous les moyens de déplacement terrestre, aérien, maritime et fluvial et dans toutes sortes de bâtiments, dispositif qui est également applicable aux équipements individuels, aux marchandises entreposées ou transportées, aux systèmes ou aux parties de systèmes ayant besoin d'être réchauffé(e)s ou refroidi(e)s.

Les systèmes de chauffage-climatisation actuels comportent de façon classique des moyens de production d'air chaud, d'air froid et éventuellement d'air réfrigéré, des moyens d'alimentation de bouches de diffusion, des bouches de diffusion réparties dans les habitacles des moyens de transport ou dans les bâtiments à chauffer ou à climatiser, des moyens de régulation de la température et/ou des commandes de réglage de la température.

Les systèmes de chauffage-climatisation des véhicules utilisent essentiellement l'air direct comme fluide caloporteur et assurent également la fonction de renouvellement de l'air.
L'air propulsé dans l'habitacle provoque aux vitesses les plus élevées de la ventilation des courants d'air qui génèrent pour certains occupants inconfort, névralgies et rhinites. Quand en hiver, il fait très froid, la ventilation - au démarrage - fait entrer dans l'habitacle de l'air plus froid qu'à l'intérieur et en été, de l'air plus chaud.
Ces systèmes atténuent peu les effets de paroi froide en hiver et de paroi chaude en été alors qu'il est reconnu que la température des parois contribue pour 50% à la sensation de confort de l'occupant. Ils ne pallient qu'imparfaitement la différence de température entre le côté au soleil et le côté à l'ombre du véhicule.
De plus, ils laissent pénétrer en continu ou ponctuellement de la pollution (vapeurs toxiques d'hydrocarbures, poussières et pollens) responsable d'odeurs désagréables mais également d'allergies cutanées et/ou respiratoires lors d'expositions prolongées.
En plus de ces inconvénients exposés, la fonction climatisation des systèmes actuels engendre une surconsommation de carburant, accentuée par leur poids et leur volume.

Les dispositifs de chauffage-climatisation des bâtiments diffèrent selon qu'ils sont utilisés dans les habitations ou dans les locaux tertiaires ou industriels. On trouve le plus souvent des convecteurs, des panneaux radiants ou des systèmes à air pulsé.
Ces dispositifs créent plus ou moins de courants d'air et une stratification des températures.

Généralement, la petite taille de ces dispositifs par rapport aux volumes à chauffer ou à refroidir nécessite la production de températures élevées ou très basses, fortement consommatrice d'énergie. Comme les systèmes employés dans les véhicules et décrits ci-dessus, ils atténuent peu les effets de paroi froide en hiver et de paroi chaude en été et pallient mal la différence de température entre le côté au soleil et le côté à l'ombre du bâtiment. Ils y laissent également entrer de la pollution et les filtres des systèmes à air pulsé doivent être changés fréquemment sous peine de véhiculer des agents pathogènes.

L'état de la technique le plus proche de l'invention figure dans le brevet US-A-4 523 519 de Johnson Wilfred B [US] du 18/06/1985.

L'un des buts de l'invention est de proposer un dispositif de chauffage-rafraîchissement qui permet de remédier à la plupart des inconvénients précitées, en particulier sur la santé des utilisateurs grâce à une diminution importante des courants d'air et de l'entrée de la pollution dans les habitacles et les bâtiments et aussi sur la consommation énergétique grâce au principe basse consommation du système et à un renouvellement d'air calculé au juste nécessaire.

Selon l'invention, le dispositif comporte les caractéristiques énoncées dans la revendication 1.

Selon un certain nombre de mises en oeuvre avantageuses :
- lesdits moyens de production alimentent en air à température définie les panneaux de type rayonnant et/ou les surfaces vitrées à triple vitrage ou à double vitrage par des canalisations de section suffisante, l'air utilisé étant renvoyé vers ces moyens de production par des canalisations de même type ;
- lesdits dispositifs de renouvellement d'air dans les habitacles sont constitués par des arrivées d'air disposées de préférence en partie haute de l'habitacle au-dessus des occupants et par des bouches d'extraction d'air disposées de préférence en partie basse au niveau des pieds ;
- il est prévu comme moyens d'alimentation en air extérieur, deux prises d'air situées de chaque côté de habitacle possédant chacune une sonde de mesure de la pollution et de la température, l'ouverture de l'une ou de l'autre des deux prises d'air étant commandée par le module de régulation en fonction des résultats de l'analyse de l'air, de la température extérieure et de la température de consigne ;
- lesdits dispositifs de renouvellement d'air dans les bâtiments comportent au moins deux prises d'air situées de préférence sur le toit et orientées selon les deux directions les plus favorables du site ;
- lesdits panneaux de type rayonnant sont situés principalement dans les parois et/ou au plafond des habitacles ou des bâtiments, parfois au sol ;
- lesdits panneaux de type rayonnant sont constitués d'une partie rayonnante qui est composée par la paroi intérieure de l'habitacle ou du bâtiment (dotée d'une capacité de rayonnement satisfaisante), par un réseau de canalisations de faible diamètre qui transmet la chaleur ou le froid essentiellement par conduction à la paroi, celle-ci pouvant ou non intégrer ces canalisations, et par un isolant réalisé par un plénum d'air et/ou par un matériau isolant positionné derrière les canalisations, ce matériau pouvant être un film plastique et/ou métallisé ;
- lesdits panneaux de type rayonnant peuvent rayonner la chaleur ou le froid directement par le réseau de canalisations qui est alors entièrement ou partiellement apparent ; c'est le cas des constructions de type chalet ou yourte dont l'intérieur ou l'ossature est en bois ;
- lesdits panneaux de type rayonnant peuvent être utilisés comme un système de récupération de chaleur ou de froid ; dans le cas des bâtiments, une face du réseau de canalisations est adossée à un isolant et l'autre face est au contact des éléments de type tuiles, ardoises, bardage ou autre matériau, pour les moyens de transport le réseau de canalisations est sous leur enveloppe externe quand celle-ci est thermiquement conductrice et pour les machines ou pour d'autres sources d'énergie récupérables, il est au contact de leurs parties chaudes ou froides de manière à constituer un capteur de chaleur ou un capteur solaire et/ou un capteur de froid intégré ;
- lesdits panneaux de type rayonnant ont une variante constituée par des surfaces vitrées à double ou à triple vitrage ; dans cette variante, la partie rayonnante est la vitre interne du double ou du triple vitrage, l'air circule entre la vitre interne et la vitre externe d'un double vitrage ou la vitre centrale d'un triple vitrage, l'isolation est complétée pour le double vitrage par un film isolant ou réfléchissant déposé sur la face intérieure de la vitre externe et pour le triple vitrage par le plénum d'air situé entre la vitre centrale et la vitre externe ; dans le cas de doubles vitrages existants, l'ajout d'un survitrage intérieur équipé d'un dispositif de distribution et de collecte de l'air permet d'obtenir le même effet ;
- une variante du système à double ou à triple vitrage rayonnant comporte un ventilateur tangentiel qui distribue sur toute la largeur le flux d'air entre les 2 vitrages du double vitrage et entre le vitrage central et le vitrage interne du triple vitrage, et des conduites avec des bouches collectrices qui renvoient l'air vers le ventilateur de manière à constituer un ensemble autonome;
- lesdits moyens de régulation de la température comportent des sondes de température intérieure placées au niveau du sol, de la tête des occupants et du plafond ; les sondes au niveau du sol et de la tête pilotent les panneaux de type rayonnant des parois et les sondes situées au plafond pilotent les panneaux du plafond ;
- lesdits moyens de régulation de la température comportent également un mode spécifique de régulation dit "transfert" qui utilise comme source de froid les parois rayonnantes de la partie exposée à l'ombre pour refroidir la partie exposée au soleil, ce transfert se faisant par des canalisations de dérivation qui envoient, après passage dans le ventilateur de circulation, l'air rafraîchi des panneaux des parois du côté à l'ombre vers les panneaux des parois du côté au soleil ou inversement qui utilise comme source de chaleur les parois rayonnantes de la partie exposée au soleil pour réchauffer la partie exposée à l'ombre ;
- lesdits moyens de régulation de la température comportent dans le cas des bâtiments un deuxième mode spécifique de rafraîchissement dit "nuit" qui utilise une prise d'air située à l'extérieur du bâtiment en un point déterminé comme le plus frais la nuit en période chaude ; l'air frais aspiré par cette prise puis filtré alimente les panneaux de type rayonnant des parois et/ou du plafond avant d'être évacué vers l'extérieur de manière à refroidir les bâtiments pendant la nuit.

Les dessins annexés illustrent l'invention.

On notera que le chiffre 10 représente l'ensemble du dispositif et les autres dizaines des sous-ensembles.
La figure 1 est une vue en coupe et en perspective d'une partie d'un habitacle de type aéronautique montrant le dispositif de renouvellement de l'air, les panneaux de type rayonnant et leur alimentation.
La figure 2 représente les éléments constitutifs du dispositif de renouvellement d'air.
La figure 3 montre une vue de dessus éclatée de la figure 1.
La figure 4 représente une vue en coupe des éléments constituant les panneaux de type rayonnant, les figures 5 et 6 deux variantes.
La figure 7 représente une vue en coupe des éléments constituant une surface vitrée de type rayonnant à triple vitrage et la figure 8 ceux d'une surface vitrée à double vitrage.
La figure 9 représente une vue en coupe de côté et de face d'une baie vitrée de type rayonnant à triple vitrage en mode chauffage.
La figure 10 représente une vue en coupe d'un habitacle de type train montrant la disposition des sondes de température intérieure.
La figure 11 représente le schéma de principe du fonctionnement du dispositif en mode chauffage et les éléments utilisés en mode "nuit". Les panneaux de type rayonnant du plafond n'ont pas été représentés.
La figure 12 représente le schéma de principe du fonctionnement du dispositif en mode "transfert".
La figure 13 représente le schéma de fonctionnement d'une variante dite "autonome" d'une baie vitrée de type rayonnant à triple vitrage en mode chauffage.

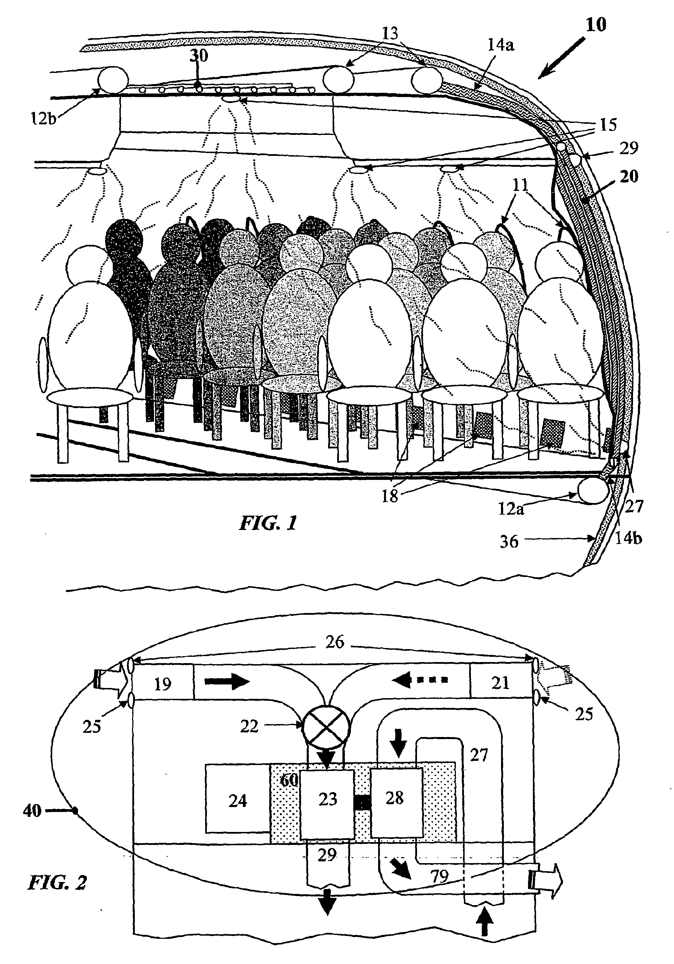

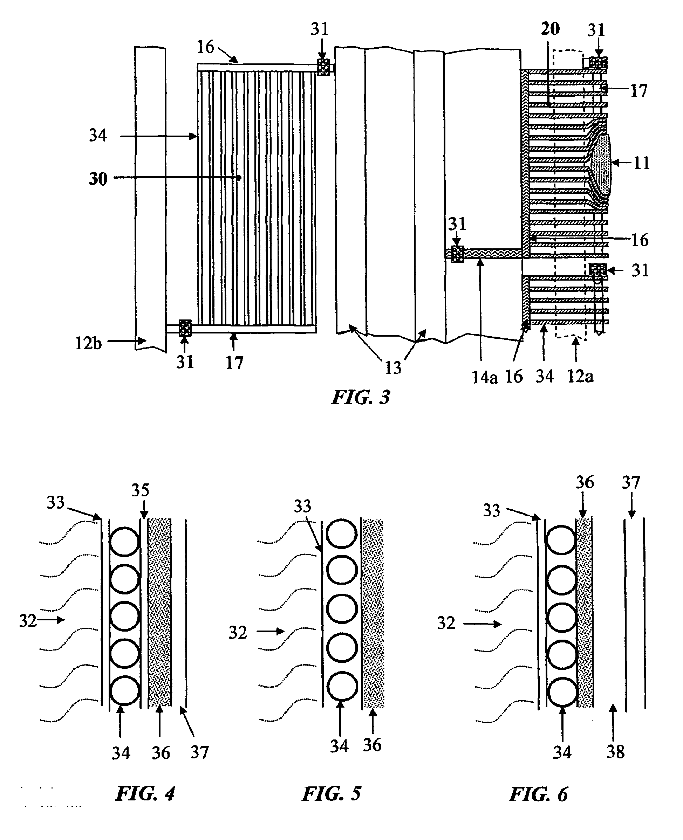

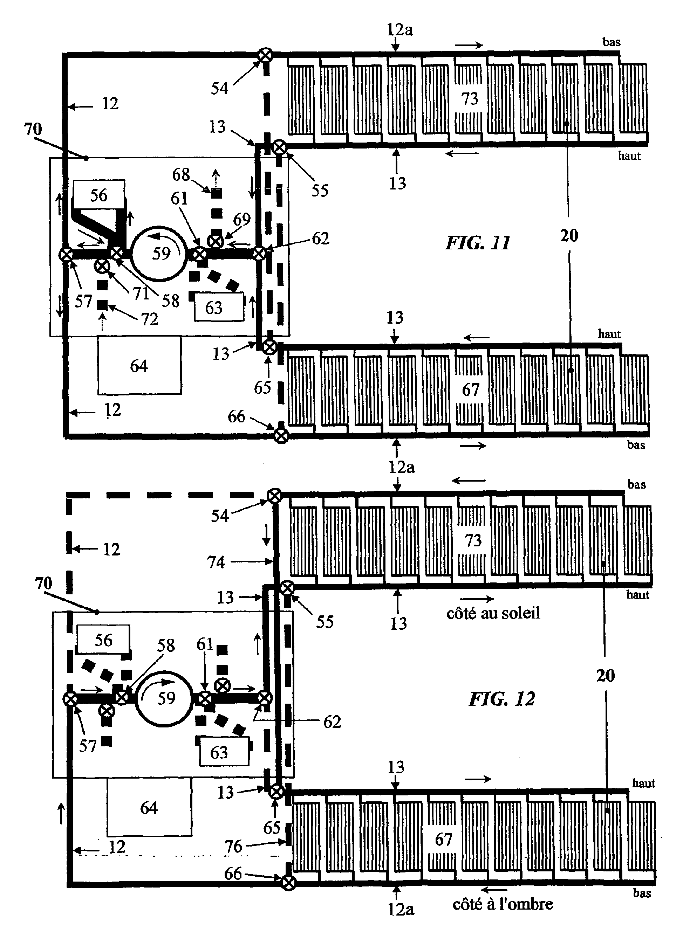

En référence aux figures 1, 2, 3 et 11, sera maintenant décrite la configuration d'ensemble du dispositif de chauffage-rafraîchissement 10 (figure 1) dans une application selon invention à un habitacle de type aéronautique.
Ce dispositif comporte une partie renouvellement d'air 40 (figure 2) débouchant dans l'habitacle, une partie chauffage-rafraîchissement proprement dite avec sa production d'air chaud, froid 70 (figure 11) ou éventuellement réfrigéré (non représentée) et son module de régulation 64, ses panneaux de type rayonnant 20 et 30 (figure 1) et les conduites d'alimentation 12a, 12b et 13 de ces panneaux.
De façon caractéristique de l'invention, le renouvellement d'air 40 (figure 2) comporte de manière générale 2 entrées d'air 19 et 21 situées à l'extérieur, de chaque côté de l'habitacle et à proximité de sa partie avant, ces entrées d'air possédant chacune deux sondes, l'une qui mesure la température 25 et l'autre la pollution 26. Après analyse des résultats obtenus, le dispositif de gestion 24 actionne la vanne 22 de manière à ouvrir l'une ou l'autre des deux entrées d'air. L'air ainsi aspiré par le moto ventilateur double 60 traverse le ventilateur 23 qui le conduit à travers la gaine de distribution 29 vers l'habitacle où il entre par les bouches de distribution 15 (figure 1). Ces bouches de distribution de type aéronautique ou autre sont placées en position haute, précisément au-dessus des sièges. L'air usé est évacué par les bouches 18 réparties au niveau des pieds. Aspiré par une gaine de collecte 27 qui le transporte jusqu'au ventilateur 28 (figure 2), il est évacué par la gaine 79 hors de l'habitacle, en quantité égale à la quantité d'air neuf introduit, les 2 ventilateurs étant entraînés par le même axe moteur.
Dans le cas des bâtiments, les deux entrées d'air extérieur sont implantées en fonction des possibilités qu'offrent le site et le bâtiment et de la qualité de l'air de l'endroit.
La partie chauffage-rafraîchissement proprement dite comporte classiquement un bloc de production 70 (figure 11) d'air chaud 56, d'air froid 63 et éventuellement d'air réfrigéré ; le flux d'air est distribué par des conduites 13 qui alimentent directement les panneaux de type rayonnant du plafond 30 (figure 1) ou indirectement ceux des parois 20 par une conduite de raccordement 14a. Le retour de l'air est assuré par une conduite de raccordement 14b vers des canalisations 12a (figure 1) et 12b (figure 3) puis vers le bloc de production.

Les figures 3, 4, 5 et 6 montrent en détail les panneaux de type rayonnant de paroi 20 et de plafond 30. Chaque panneau de type rayonnant est constitué d'une conduite de distribution 16 qui apporte l'air vers un réseau de canalisations de faible diamètre 34 et d'une conduite réceptrice 17 qui renvoie l'air par les gaines 12a et 12b au système de production. La partie rayonnante est constituée par la paroi intérieure 33 (dotée d'une capacité de rayonnement satisfaisante), celle-ci intégrant ou non les canalisations 34. L'isolation est réalisée soit par un matériau isolant 36 s'appuyant ou non sur un support 35, soit par de l'air 38, soit encore par un film isolant ou réfléchissant (non représenté) fixé sur les canalisations à la place du support 35. Les canalisations 34, lorsqu'elles ne sont pas intégrées à la paroi 33, sont maintenues en contact avec elle par tout système de fixation n'ayant pas d'effet isolant.
Cette configuration permet à l'air circulant dans les canalisations de réchauffer ou de refroidir par conduction la paroi qui lui est associée créant ainsi le rayonnement 32 du côté intérieur de l'habitacle ou du bâtiment. Sur la figure 3, les canalisations 34 contournent le hublot 11 en se resserrant pour obtenir un rayonnement plus important autour de celui-ci.

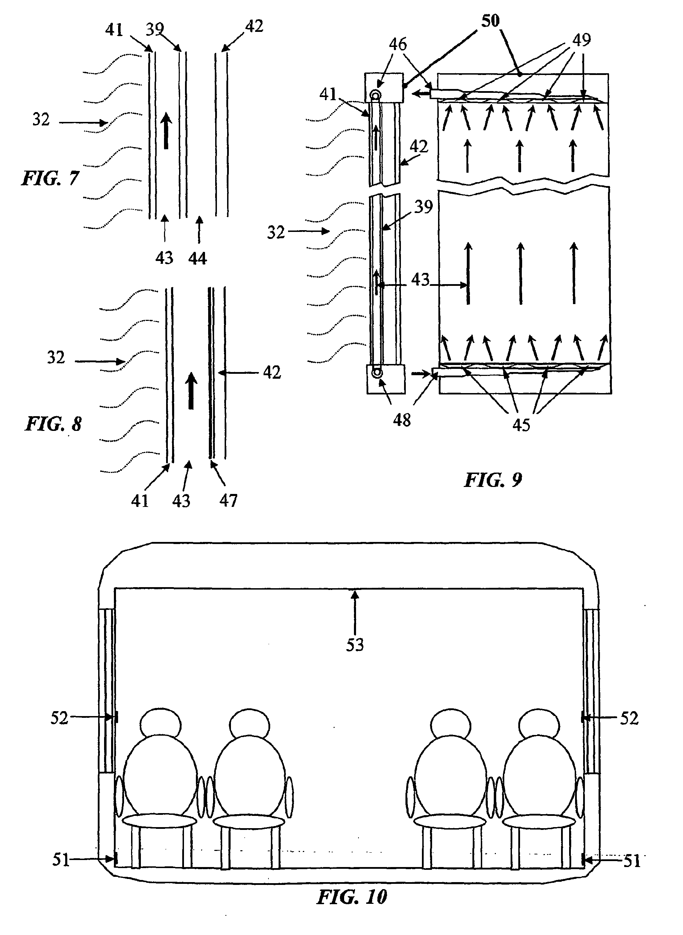

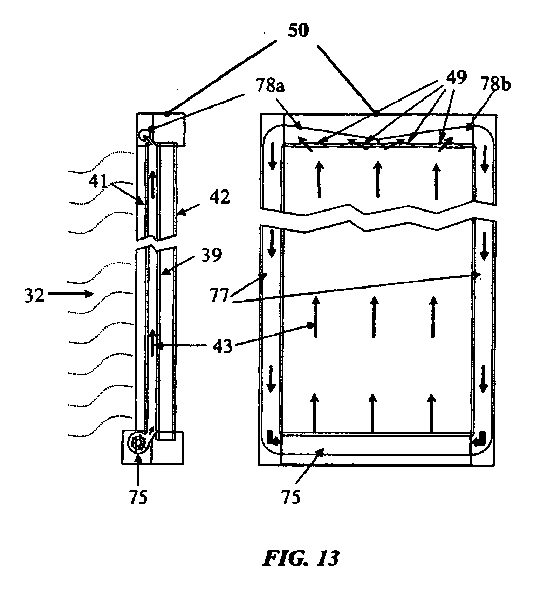

Les figures 7, 8, 9 et 13 montrent que l'effet rayonnant 32 est aussi obtenu à travers les surfaces vitrées 50 (figures 9 et 13) d'habitacles ou de bâtiments, ces surfaces vitrées étant alors soit un double vitrage 41 et 42, soit un triple vitrage 41, 39 et 42. Ces surfaces vitrées sont traversées par un flux d'air froid ou d'air chaud 43 qui arrive entre deux vitres ; l'air passe entre les vitres 41 et 39 dans un triple vitrage où l'espace rempli d'air 44 assure l'isolation. Dans un double vitrage, les déperditions à travers la vitre 42 sont limitées par un film isolant ou réfléchissant 47.

La figure 9 montre en détail une surface vitrée 50 triple vitrage de bâtiment en mode chauffage. Le flux d'air 43 arrive par une conduite de distribution rigide en partie basse 48 qui le répartit à travers des bouches 45 entre les 2 vitres 41 et 39 et sort en partie haute par les bouches 49 de la conduite réceptrice 46.

La figure 13 montre le fonctionnement d'une variante dite "autonome" d'une baie vitrée de type rayonnant à triple vitrage en mode chauffage. Le flux d'air 43 produit par le ventilateur tangentiel 75 sort directement sur toute sa longueur et monte entre les 2 vitres 41 et 39 pour ressortir en partie haute par les bouches 49 des conduites réceptrices 78a et 78b vers deux conduites de retour rigides 77 qui canalisent l'air de chaque côté du vitrage jusqu'à l'entrée du ventilateur tangentiel. Le chauffage de l'air est assuré par une résistance électrique (non représentée) de la largeur de la fenêtre et placée avantageusement à la sortie du ventilateur tangentiel.

La figure 10 représente la disposition des sondes de température interne dans un habitacle de type train. Ces sondes sont placées respectivement au niveau du sol 51 et de la tête des occupants 52 pour piloter la réduction de la stratification de l'air ; les sondes 53 en partie haute pilotent essentiellement les panneaux de type rayonnant du plafond 30 (figure 3) en mode refroidissement (non représentés). Le nombre des sondes 51, 52 et 53 par habitacle (non représenté) est défini en fonction de la précision de température souhaitée. Par exemple, si un confort supérieur est requis, chaque unité de panneau de type rayonnant correspond à une rangée de sièges à laquelle est associé un couple de sondes sol et tête : pour un confort normal, ce couple de sondes peut couvrir trois rangées.

La figure 11 représente le schéma de fonctionnement en mode chauffage du dispositif. Le schéma montre le bloc de production 70 composé classiquement d'un moto-ventilateur 59 en lui-même connu, d'une source chaude 56, d'une source froide 63 et de l'unité de pilotage 64 qui commande le fonctionnement selon 3 modes (chauffage, rafraîchissement et "transfert" en circuit fermée) et un mode "nuit" en circuit ouvert.
Dans le cas du mode chauffage illustré, l'électrovanne 61 fermée permet de bipasser la source froide 63. Ainsi, l'air après être passé dans le moto-ventilateur 59 continue de circuler par l'électrovanne 58 ouverte à travers la source chaude 56 puis il passe à travers l'électrovanne 57 ouverte en position sortie deux voies dans les conduites 12 qui transportent l'air chauffé à travers les électrovannes 54 et 66 ouvertes en sortie 1 voie vers les conduites 12a et les unités de panneaux de type rayonnant des parois 73 et 67 par leurs arrivées basses. Le retour se fait par les conduites 13, les électrovannes 55 et 65 ouvertes en sortie 1 voie vers l'électrovanne 62 ouverte en position arrivée 2 voies vers le moto-ventilateur. Chaque unité de panneau de type rayonnant 20 (figure 3) dont les 2 électrovannes 31 sont en position ouverte est traversée par l'air chaud, les électrovannes 31 étant commandées par la régulation 64 (figure 11) après comparaison entre la consigne générale de température intérieure dans l'habitacle et les températures fournies par ses sondes internes associées 51 et 52 (figure 10).
Dans le cas d'une voiture de train avec commande d'ajustement de la température intérieure, cet ajustement n'est autorisé que dans les limites prévues pour optimiser le confort et la consommation. Pour un confort de type supérieur individualisé, la commande autorise une plus grande amplitude de réglage de cette température.
Pour le fonctionnement en mode froid (non représenté), l'électrovanne 58 fermée permet de bipasser la source chaude 56, le moto-ventilateur 59 envoie l'air en sens inverse grâce à un inverseur (non représenté) afin que l'air froid descende dans les unités de panneaux de type rayonnant des parois 73 et 67 et circule à travers les unités des panneaux de type rayonnant du plafond 30 (non représentés) pilotées par les sondes du plafond 53 (figure 10). Dans une configuration avantageuse, la source froide est de type caloduc utilisant un circuit d'air extérieur pour évacuer la chaleur extraite.
Dans le cas des bâtiments, le mode "nuit" (figure 11) comporte une prise d'air à l'extérieur du bâtiment (au point déterminé comme le plus froid la nuit en période chaude), l'air aspiré est filtré (non représenté) ; il arrive par la gaine d'entrée 72 et traverse l'électrovanne 71 ouverte, les électrovannes 58 et 61 étant fermées pour bipasser la source chaude et la source froide ; l'air circule dans le sens froid vers les panneaux de type rayonnant des parois 73 et 67 comme décrit précédemment et l'évacue ensuite à l'extérieur par la conduite 68 après passage dans l'électrovanne 69 ouverte. Ce mode "nuit" permet alors d'améliorer le confort général des bâtiments et en particulier des habitations.

La figure 12 représente le schéma de fonctionnement en mode "transfert" du dispositif. Dans l'illustration, on utilise les unités de panneaux de type rayonnant de paroi 67 à l'ombre comme source de froid, ce transfert étant réalisé lorsque les électrovannes 58 et 61 sont fermées - bipassant la source chaude 56 et la source froide 63 - et que le moto-ventilateur 59 fonctionne dans le même sens qu'en mode froid. L'air après s'être refroidi dans les panneaux de type rayonnant 67 sort par la gaine 12a, traverse l'électrovanne 66 ouverte vers la canalisation 12 et l'électrovanne 57 ouverte en sortie 1 voie vers le moto-ventilateur 59, puis traverse successivement les électrovannes 62 et 55 ouvertes en sortie 1 voie vers la gaine 13 qui le conduit vers l'arrivée haute des unités des panneaux de type rayonnant de la paroi 73 située du côté au soleil ; le retour d'air se fait par la gaine 12a, puis il est dérivé par l'électrovanne 54 ouverte en sortie 1 voie vers la conduite 74 et ensuite par l'électrovanne 65 ouverte en sortie 1 voie vers la gaine 13 (entrée haute des unités de panneaux de type rayonnant de la paroi 67). Dans ce mode, les unités de panneaux de type rayonnant du plafond 30 ne sont en principe pas utilisées.

Le dispositif selon l'invention, qui peut utiliser des sources faibles de chaleur ou de froid grâce à ses capteurs intégrés, est particulièrement destiné au chauffage-rafraîchissement des habitacles des moyens de transport en général dont les aéronefs, les trains, les trams et trolleybus, les bus, les véhicules industriels, les engins de manutention, les automobiles, les caravanes et autocaravanes, les monocycles, les cycles, les bateaux, les voiliers, de tous types de bâtiment y compris les mobiles homes, les modulaires, les abris démontables (tentes, chapiteaux et de type yourtes), aux postes de travail, aux sièges en général, aux vêtements spécifiques, aux équipements de sauvetage individuels ou collectifs et également au réchauffage, au dégivrage et au rafraîchissement d'équipements au sens large.

## Revendications

1. Dispositif de chauffage-rafraîchissement (10) des personnes dans les habitacles de tous les moyens de déplacement terrestre, aérien, maritime et fluvial et dans toutes sortes de bâtiments, également applicable aux équipements individuels, aux marchandises entreposées ou transportées, aux systèmes ou aux parties de systèmes ayant besoin d'être réchauffé(e)s ou refroidi(e)s, étant constitué en combinaison:
- de moyens de production d'air chaud (56), d'air froid (63) et éventuellement d'air réfrigéré, lesdits moyens de production étant en priorité des capteurs réversibles de chaleur ou de froid qui utilisent le principe de panneaux de type rayonnant (20, 30, 67 et 73) disposés respectivement sur la face intérieure des parois et/ou au plafond et/ou éventuellement au sol de l'habitacle ou du bâtiment, ou leur variante constituée de surfaces vitrées de type rayonnant et secondairement d'autres moyens existants,
- de moyens de renouvellement d'air (40) indépendants des moyens de chauffage-rafraîchissement comprenant deux prises d'air extérieures (19, 21) pilotées par des moyens de commande (24) comportant des sondes de température (25) et des sondes de mesure de la pollution de l'air (26),
- de moyens d'alimentation (12, 13) des panneaux de type rayonnant en air chaud, froid ou réfrigéré,
- de moyens de régulation automatique (64); ledit dispositif étant **caractérisé en ce que** les moyens de régulation automatique (64) utilisent les données fournies par des capteurs de température intérieure (51, 52 et 53 et les données fournies par un ou des capteur(s) de température extérieure pour commander la circulation de l'air dans les panneaux de type rayonnant (20, 30, 67 et 73) selon quatre modes, les deux modes classiques du chauffage et du rafraîchissement, un mode spécifique dit mode "transfert" qui permet à travers les panneaux de type rayonnant (73 et 67) de transférer la chaleur d'un mur ou d'une paroi intérieur(e) exposé(e) au soleil vers un mur ou une paroi intérieur(e) situé(e) à l'ombre ou de transférer la fraîcheur d'un mur ou d'une paroi intérieur(e) situé(e) à l'ombre vers un mur ou une paroi intérieur(e) situé(e) au soleil et un autre mode spécifique dit mode "nuit" dans lequel l'air frais extérieur est utilisé la nuit comme source de rafraîchissement dans les bâtiments, et éventuellement complétés par des commandes individualisées de température.

2. Dispositif selon la revendication 1, **caractérisé en ce que** le panneau de type rayonnant (20, 30) est constitué d'une plaque (33) ou de deux plaques (33 et 35), d'un réseau de canalisations (34), qui est accolé ou intégré à la plaque (33), dans lequel circule de l'air chauffé ou refroidi, d'un isolant (36) accolé au réseau de canalisations (34) ou à la plaque (33) si elle intègre les canalisations ou à la plaque (35), et éventuellement d'un plénum d'air (38) situé entre l'isolant (36) et la paroi extérieure (37).

3. Dispositif selon la revendication 2, **caractérisé en ce qu'**une variante dudit panneau de type rayonnant (20, 30) a comme surface de rayonnement la surface du réseau de canalisations (34).

4. Dispositif selon la revendication 2, **caractérisé en ce que** ledit panneau de type rayonnant (20, 30) a une variante constituée par des surfaces vitrées (50) à double vitrage (41, 42) ou à triple vitrage (41, 39, 42), une conduite distributrice rigide en partie basse (48) dont les bouches (45) arrivent entre les vitres (41, 42) ou (41, 39) et une conduite rigide (46) avec ses bouches réceptrices (49) en partie haute, de manière à permettre le passage du flux d'air froid ou d'air chaud (43).

5. Dispositif selon la revendication 4, **caractérisé en ce que** lesdites surfaces vitrées (50) à double vitrage (41, 42) ou à triple vitrage (41, 39, 42) ont une variante autonome qui comporte un ventilateur tangentiel (75) qui redistribue entre les vitrages (41, 42) ou (41, 39, 42) et sur toute leur largeur le flux d'air collecté par les conduites réceptrices (78a, 78b, 77).

6. Dispositif selon la revendication 5, **caractérisé en ce qu'**une variante constituée par une surface vitrée à triple vitrage (50) est obtenue par une surface vitrée à double vitrage existante à laquelle est ajouté un survitrage intérieur équipé du ventilateur tangentiel (75).

7. Dispositif selon les revendications 1 et 2, **caractérisé en ce que** le moyen de production d'air chaud (56) ou d'air froid (63) est constitué par un réseau de canalisations (34), du type de celui utilisé dans les panneaux de type rayonnant (20, 30), ledit réseau :
- ayant dans les bâtiments une face adossée à un isolant et l'autre face placée au contact des éléments de type tuiles, ardoises, bardage ou autre matériau, ou
- étant dans les moyens de transport situé sous leur enveloppe externe quand celle-ci est thermiquement conductrice, ou
- dans le cas de machines ou d'autres sources d'énergie récupérables étant placé au contact de leurs parties chaudes ou froides de manière à constituer un capteur de chaleur ou un capteur solaire et/ou un capteur de froid intégré.

8. Dispositif selon la revendication 1, **caractérisé en ce que** les au moins deux prises d'air différentes (19, 21) des moyens de renouvellement de l'air (40) sont situées de chaque côté de l'habitacle dans les moyens de transport et en hauteur pour les bâtiments.

9. Dispositif selon la revendication 1 ou 8, **caractérisé en ce que** les sondes de température (25) et les sondes de mesure de la pollution de l'air (26) associées aux moyens de commande (24) des prises d'air (19, 21) sont situées au niveau de chacune desdites prises d'air de manière à commander l'ouverture de l'une ou de l'autre.

10. Dispositif selon la revendication 1, **caractérisé en ce que** les moyens d'alimentation des panneaux de type rayonnant (20) et/ou des surfaces vitrées (50) en mode "transfert" comportent une conduite de dérivation (74) de manière à utiliser les panneaux de type rayonnant (67) et/ou les surfaces vitrées à l'ombre comme source de froid afin de refroidir les panneaux de type rayonnant (73) et/ou les surfaces vitrées au soleil ou de manière inverse une conduite de dérivation (76) pour utiliser les panneaux de type rayonnant (73) et/ou les surfaces vitrées au soleil comme source de chaleur pour réchauffer les panneaux (67) et/ou les surfaces vitrées à l'ombre.

## Claims

1. Heating-cooling device (10) for people in the passenger compartments of all means of land, air, sea, and river travel, and in all sorts of buildings, also applicable to individual pieces of equipment, to goods which are stored or transported, to systems or parts of systems needing to be heated up or cooled down, made up of a combination of the following:
- means of producing hot air (56), cold air (63) and possibly chilled air, said means of production are primarily reversible heat or cold sensors which use the principle of radiating panels (20, 30, 67 and 73) arranged respectively on the inside of the walls and/or the ceiling and/or possibly on the floor of the passenger compartment or the building or their alternative consisting of glazed surfaces of the radiating type, and secondarily other existing means,
- air renewal means (40) which are independent of the heating-cooling means, comprising two air intakes (19, 21) located outside controlled by means of controlling (24) comprising temperature probes (25) and probes for measuring the pollution of the air (26),
- means of supplying (12, 13) the radiating panels with hot, cold or chilled air,
- means of automatic control (64), said device is **characterized in that** the means of automatic control (64) use the data supplied by internal temperature probes (51, 52 and 53) and the data supplied by one or more temperature probes located outside to control the air flow in the radiating panels (20, 30, 67 and 73) according to four modes, the two classic modes, namely heating and cooling modes, a specific control mode called "transfer" mode that allows through the radiating panels (73, 67) to transfer the heat of a wall or an inner wall exposed to the sun to a wall or an inner wall in the shade, or to transfer the cool of a wall or an inside wall in the shade to a wall or an inside wall in the sun, and another specific mode, called "night" mode, in which the cool air from outside is used at night as a cooling source in the buildings, and possibly supplemented by individualised temperature controls.

2. Device according to claim 1, **characterised in that** the radiating panel (20, 30) is made up of a plate (33) or two plates (33 and 35), an array of ducts (34), which can be next to or integrated into the plate (33), in which the heated or cooled air circulates, an insulator (36) next to the array of ducts (34), or the plate (33) if it integrates the ducts, or the plate (35), and possibly an air plenum (38) located between the insulator (36) and the outer wall (37).

3. Device according to claim 2, **characterised in that** an alternative of said radiating panel (20, 30) can have the surface of the array of ducts (34) as a radiating surface.

4. Device according to claim 2, **characterised in that** said radiating panel (20, 30) has an alternative comprised of glazed surfaces (50) with double glazing (41, 42) or triple glazing (41, 39, 42), a rigid distribution pipe in the lower part (48) whose vents (45) arrive between the windows (41, 42) or (41, 39) and a rigid pipe (46) with its receiving vents (49) in the upper part, so as to make it possible to allow the flow of cold or hot air to pass.

5. Device according to claim 4, **characterised in that** said (50) double glazings (41, 42) or triple glazings (41, 39, 42) have a standalone alternative which comprises a tangential fan (75) which redistributes the air flow collected by the receiving pipes (78a, 78b, 77) between the windows (41, 42) or (41, 39, 42) and over their whole width.

6. Device according to claim 5, **characterised in that** an alternative comprised of a triple glazing (50) can be achieved in the case of an existing double glazing by adding inside secondary glazing equipped with the tangential fan (75).

7. Device according to the claims 1 and 2, **characterised in that** the means of producing hot air (56) or cold air (63) is comprised of an array of ducts (34), of the type used in the radiating panels (20, 30), said array:
- in the buildings has one side backing onto an insulator and the other side in contact with elements of the tile, slate, or siding type or other material, or
- in the means of transport is in their outer casing when the latter is thermally conductive, or
- in the case of machines or other recoverable sources of energy, is in contact with their hot or cold parts so as to constitute an integrated heat sensor or solar sensor and/or cold sensor.

8. Device according to claim 1, **characterised in that** the at least two different air intakes (19, 21) of the air renewal means (40) are located on each side of the passenger compartment in the means of transport and at a height for buildings.

9. Device according to claim 1 or 8, **characterised in that** the temperature probes (25) and the pollution probes (26) associated with the means of controlling (24) the air intakes (19, 21) are located at each air intake so as to control the opening of either of them.

10. Device according to claim 1, **characterised in that** the means supplying the radiating panels (20) and/or the glazed surfaces (50) in "transfer" mode comprise a derivation pipe (74) so as to use the radiating panels (67) and/or the glazed surfaces in the shade as a source of cold in order to cool the radiating panels (73) and/or the glazed surfaces in the sun or inversely a derivation pipe (76) to use the radiating panels (73) and/or the glazed surfaces in the sun as a source of heat to warm up the panels (67) and/or the glazed surfaces in the shade.

## Patentansprüche

1. Vorrichtung zur Erwärmung-Kühlung (10) von Personen in den Innenräumen von allen Land-, Luft- See- und Flussfortbewegungsmitteln und in allen Arten von Gebäuden, ebenfalls anwendbar auf persönliche Ausrüstung, auf gelagerte oder transportiere Waren, auf Systeme oder Systemteile, die erwärmt oder gekühlt werden müssen, bestehend aus einer Kombination von:
- Produktionsmitteln von Heißluft (56), Kaltluft (63) und eventuell gekühlter Luft, wobei die besagten Produktionsmittel erstrangig umkehrbare Wärme- oder Kältekollektoren sind, die das Prinzip der Paneele vom Typ Strahlungspaneel (20, 30, 67 und 73) verwenden, die jeweils auf der Innenseite der Wände und/oder der Decke und/oder eventuell auf dem Boden des Innenraums oder des Gebäudes angeordnet sind, oder ihre aus verglasten Flächen vom Typ Strahlungsflächen bestehende Variante, und zweitrangig andere vorhandene Mittel,
- von den Erwärmungs-Kühlungs-Mitteln unabhängigen Mitteln zur Lufterneuerung (40), die zwei äußere Lufteinlässe (19, 21) umfassen, die mit Bedienvorrichtungen (24) gesteuert werden, und Temperatursonden (25) sowie Messsonden der Luftverschmutzung (26) aufweisen,
- Mitteln zur Versorgung (12, 13) der Paneele vom Typ Strahlungspaneele mit heißer, kalter oder gekühlter Luft,
- Mitteln zur automatischen Regelung (64), wobei die besagte Vorrichtung **dadurch gekennzeichnet ist, dass** die Mittel zur automatischen Regelung (64) die von den Innentemperatursonden (51, 52 und 53) gelieferten Daten verwenden, und die von der oder den Außentemperatursonde(n) gelieferten Daten, um die Luftumwälzung in den Paneelen vom Typ Strahlungspaneele (20, 30, 67 und 73) anhand von vier Betriebsarten zu steuern, den beiden klassischen Erwärmungs- und Kühlungsbetriebsarten, einer spezifischen als "Transferbetrieb" bezeichneten Betriebsart, bei der anhand von Paneelen vom Typ Strahlungspaneele (73 und 67) die Wärme einer der Sonne ausgesetzten Außenmauer oder Außenwand zu einer im Schatten gelegenen Innenmauer oder Innenwand transferiert werden kann, oder die Kühle einer im Schatten gelegenen Innenmauer oder Innenwand an eine in der Sonne gelegene Innenmauer oder Innenwand, und einer weiteren spezifischen Betriebsart, die als "Nachtbetrieb" bezeichnet wird, bei der nachts die frische Außenluft als Kühlquelle in den Gebäuden eingesetzt wird, eventuell ergänzt durch individuelle Temperatursteuerungen.

2. Vorrichtung nach Anspruch 1, **dadurch gekennzeichnet, dass** das Paneel vom Typ Strahlungspaneel (20, 30) aus einer Platte (33) oder aus zwei Platten (33 und 35) besteht, aus einem Leitungsnetz (34), das an der Platte (33) anliegt oder darin integriert ist, in dem erwärmte oder gekühlte Luft zirkuliert, aus einer am Leitungsnetz (34) oder an der Platte (33), sofern die Leitungen in sie integriert sind, oder an der Platte (35) anliegenden Isolierung (36) und eventuell aus einer zwischen der Isolierung (36) und der Außenwand (37) gelegenen Luftkammer (38).

3. Vorrichtung nach Anspruch 2, **dadurch gekennzeichnet, dass** eine Variante des besagten Paneels vom Typ Strahlungspaneel (20, 30) die Oberfläche des Leitungsnetzes (34) als Strahlungsfläche hat.

4. Vorrichtung nach Anspruch 2, **dadurch gekennzeichnet, dass** das besagte Paneel vom Typ Strahlungspaneel (20, 30) eine aus verglasten Flächen (50) bestehende Fläche mit Doppelverglasung (41, 42) oder Dreifachverglasung (41, 39, 42) aufweist, ein steifes Verteilungsrohr im unteren Bereich (48), dessen Mündungen (45) zwischen den Scheiben (41, 42) oder (41, 39) enden, und ein steifes Rohr (46) mit Aufnahmemündungen (49) im oberen Bereich, um den Durchfluss des Kalt- oder Warmluftstroms (43) zu ermöglichen.

5. Vorrichtung nach Anspruch 4, **dadurch gekennzeichnet, dass** die besagten verglasten Flächen (50) mit Doppelverglasung (41,42) oder Dreifachverglasung (41, 39, 42) eine autonome Variante haben, die einen Querstromventilator (75) umfasst, der zwischen den Scheiben (41, 42 oder 41, 39, 42) und über der ganzen Breite den von den Aufnahmeleitungen (78a, 78b, 77) aufgenommenen Luftstrom verteilt.

6. Vorrichtung nach Anspruch 5, **dadurch gekennzeichnet, dass** eine aus einer verglasten Fläche mit Dreifachverglasung (50) bestehende Variante erhalten wird, indem einer vorhandenen verglasten Fläche mit Doppelverglasung eine innere Überverglasung beigefügt wird, die mit dem Querstromventilator (75) ausgestattet ist.

7. Vorrichtung nach den Ansprüchen 1 und 2, **dadurch gekennzeichnet, dass** das Mittel zur Erzeugung von Heißluft (56) oder Kaltluft (36) aus einem Leitungsnetz (34) besteht vom Typ, wie es in den Paneelen vom Typ Strahlungspaneel (20, 30) zum Einsatz kommt, wobei das besagte Netz:
- in den Gebäuden mit einer Seite an einer Isolierung anliegt, und mit der anderen Seite in Berührung mit Elementen wie Dachziegeln, Schiefertafeln, Verkleidungselementen oder einem anderen Material ist, oder
- in den Transportmitteln unter deren Außenhülle positioniert ist, sofern diese thermisch leitend ist, oder
- im Fall von Maschinen oder anderen rückgewinnbaren Energiequellen mit deren heißen oder kalten Teilen in Berührung ist, so dass sie einen Wärme- oder Sonnenkollektor und/oder einen integrierten Kältekollektor bilden.

8. Vorrichtung nach Anspruch 1, **dadurch gekennzeichnet, dass** sich beiderseits des Innenraums bei Verkehrsmitteln und in der Höhe bei Gebäuden die mindestens zwei verschiedenen Lufteinlässe (19, 21) für die Lufterneuerungsmittel (40) befinden.

9. Vorrichtung nach Anspruch 1 oder 8, **dadurch gekennzeichnet, dass** sich die mit den Bedienvorrichtungen (24) der Lufteinlässe (19, 21) verbundenen Temperatursonden (25) und Messsonden der Luftverschmutzung (26) auf der Ebene jedes der besagten Lufteinlässe befinden, um somit die Öffnung des einen oder des anderen zu steuern.

10. Vorrichtung nach Anspruch 1, **dadurch gekennzeichnet, dass** die Mittel zur Versorgung der Paneele vom Typ Strahlungspaneel (20) und/oder der verglasten Flächen (50) in der Betriebsart "Transfer" eine Abzweigungsleitung (74) aufweisen, so dass die Paneele vom Typ Strahlungspaneel (67) und/oder die verglasten Flächen im Schatten als Kältequelle verwendet werden, um die Paneele vom Typ Strahlungspaneel (73) und/oder die in der Sonne befindlichen verglasten Flächen zu kühlen, oder umgekehrt eine Abzweigungsleitung (76), um die Paneele vom Typ Strahlungspaneele (73) und/oder die verglasten Flächen in der Sonne als Wärmequelle zu verwenden, um die Paneele (67) und/oder die verglasten Flächen im Schatten zu erwärmen.
